# EUROPEAN PATENT APPLICATION

(11) **EP 4 411 865 A1**
(43) Date of publication of application: **07.08.2024**
(21) Application number: 24155029.2
(22) Date of filing: 31.01.2024
(51) Int. Cl.: H01M 4/131, H01M 4/525, H01M 10/0525, H01M 10/0587, H01M 4/02

(54) **BATTERY WITH IMPROVED ELECTRODE ASSEMBLY**

(30) Priority: 01.02.2023 SE 2350093
(71) Applicant: Northvolt AB, 112 47 Stockholm (SE)
(72) Inventor: Patankar, Isha, 724 60 Västerås (SE); Shima, Yosuke, 724 62 Västerås (SE)
(74) Representative: Engman, Eva Jessica

(57) **Abstract**

This disclosure relates to an electrode assembly for an energy storage device. The electrode assembly comprises a first inner active layer and a first outer active layer. The first inner active layer and the first outer active layer each comprise a first inner and a first outer active material component, wherein the crystallinity of the first inner active material component and the first outer active material component is different.

## Description

### FIELD OF THE INVENTION

The disclosure relates to a rolled electrode assembly which has improved capacity balance between the inner and outer electrodes in the roll. The disclosure also relates to methods of fabricating an electrode assembly and a battery comprising the electrode assembly.

### BACKGROUND

Rechargeable or 'secondary' batteries find widespread use as electrical power supplies and energy storage systems. For example, in automobiles, battery packs formed of a plurality of battery modules, wherein each battery module includes a plurality of electrochemical cells, are provided as a means of effective storage and utilization of electric power.

Jellyrolls, or Swiss rolls, are commonly used in the secondary cells. A jellyroll is a type of electrode assembly having a structure in which a positive electrode and a negative electrode, each having a long conductive foil (substrate, or current collector) with an active material, are wound with a separator interposed in-between. The wound assembly therefore has a cylindrical or 'roll' shape. The roll is then placed into a casing or can. In some secondary cells, the roll is then soaked in electrolyte before the can is sealed. However, a solid electrolyte may also be used; in which case, the separator is not required. Jelly roll or Swiss roll batteries are often referred to as cylindrical batteries.

A jellyroll battery comprises a plurality of interfacial positive and negative electrodes, also called interfacial electrode pairs. Due to the wound structure, the inner electrode in any given electrode pair has a shorter arc length than the corresponding outer electrode. The proportional difference in arc length is more significant towards the centre of the wind, where the curvature is higher.

In a wound assembly such as a jelly roll therefore, the radius of curvature of two electrodes in an interfacial pair is different, which means that the size (length) of the negative and positive electrodes is different. Usually, the smaller or shorter the electrode, the lower the capacity. This results in a capacity imbalance in each of the interfacial electrode pairs and there is a risk of an uneven electrochemical reaction during charge and discharge.

Capacity imbalance causes a diminished battery performance, and can lead to poor charge/discharge characteristics, a limited battery lifetime, and an increased risk of lithium metal dendrification at the negative electrode.

There is therefore a need for an improved way of mitigating capacity imbalance across interfacial electrode pairs in cylindrical batteries.

### SUMMARY

The object of the present invention is to provide an electrode assembly suitable for mitigating capacity imbalance in a cylindrical battery.

The present invention provides an electrode assembly that improves battery performance, for example, improved charge/discharge characteristics and an increased lifetime.

According to a first aspect of the disclosure is provided an electrode assembly for an energy storage device, the electrode assembly comprising:
a first composite electrode;
a second composite electrode;
a first separator; and
a second separator,
wherein:
the first composite electrode comprises a first conductive foil comprising an inner side and an outer side,
the second composite electrode comprises a second conductive foil comprising an inner side and an outer side;
the first separator is positioned between the first and second composite electrodes,
wherein the first composite electrode, the first separator, the second composite electrode and the second separator are wound about a central axis to form a rolled assembly such that
the inner side of the first conductive foil is oriented closer to the central axis than the outer side of the first conductive foil,
the inner side of the second conductive foil is oriented closer to the central axis than the outer side of the second conductive foil, and
the second separator is positioned between the outer side of the second conductive foil and the inner side of the next wind of the first conductive foil wherein,
the inner side of the first composite electrode comprises a first inner active layer comprising a first inner active material layer, and the outer side of the first composite electrode comprises a first outer layer comprising a first outer active material,
the inner side of the second composite electrode comprises a second inner active layer comprising a second inner active material, and the outer side of the second composite electrode comprises a second outer active layer comprising a second outer active material;
wherein,
the first inner active material comprises a first inner active material component and the first outer active material comprises a first outer active material component, wherein
the chemical formula of the first inner active material component the chemical formula of the first outer active material component is the same, and
the crystallinity of the first inner active material component and the crystallinity of the first outer active material component is different.

In some embodiments, the internal resistance (DCIR) of a half cell comprising the first inner active layer is higher than the internal resistance of a half cell comprising the first outer active layer.

In some embodiments, the second inner active layer and the second outer active layer are the same.

In some embodiments, the first inner active layer and the first outer active layers further comprise a binder and optionally a conductive additive.

In some embodiments, the first inner active material and the first outer active material comprise a further active material.

In some embodiments, the first inner active material consists of the first inner active material component, and the first outer active material consists of the first outer active material component.

In some embodiments, the wt % binder, conductive additive and/or active material is the same in the first inner and first outer active layer.

In some embodiments, the binder and/or conductive additive of the first inner and first outer active layers are the same.

In some embodiments, the wt % of first inner active material is the same as the wt % of first outer active material.

In some embodiments, the wt % of the first inner active material component is the same as the wt % of the first outer active material component.

In some embodiments, the first inner active material component and the first outer active material component are the same apart from the crystallinity.

In some embodiments, the first inner active material component and the first outer active material component are single crystal materials.

In some embodiments, the first inner active material component and the first outer active material component are polycrystalline materials.

In some embodiments, one of the first inner and first outer active material components is a single crystal material and the other is a polycrystalline material.

In some embodiments the first inner active material component has a higher crystallinity than the first outer active material component.

In some embodiments, the first inner active material component is a single crystal material and the first outer active material component is a polycrystalline material.

In some embodiments, the first cycle efficiency of a half cell comprising the first inner active layer is different to the first cycle efficiency of the same half cell comprising the first outer active layer. Preferably, the first cycle efficiency of a half cell comprising the first inner active layer is lower than the first cycle efficiency of the same half cell comprising the first outer active layer.

In some embodiments the first cycle efficiency of a half cell comprising the first inner active layer is from 0.05 to 20% lower than the first cycle efficiency of the same half cell comprising the first outer active layer, for instance from 0.1 to 12% lower, or from 0.1 to 8% lower, or from 0.2 to 5% lower, preferably the first cycle efficiency of a half cell comprising the first inner active layer is from 0.5 to 5% lower.

In some embodiments, the first inner active material component and the first outer active material component have a different specific capacity after the first charge/discharge cycle.

Preferably, the first inner active material component has a lower specific capacity than the first outer active material component after the first charge/discharge cycle.

Preferably, the first inner active layer has a lower specific capacity than the first outer active layer after the first charge/discharge cycle.

In some embodiments, the first inner active material and the first outer active material are positive active materials.

Preferably, the first inner active material and the first outer active material are a lithium transition metal oxide complexes such as an Li-NMC material, or a combination of Li-NMC materials.

In some embodiments, the energy storage device is a lithium-ion battery.

Preferably, the energy storage device is a secondary lithium-ion battery.

Preferably, the energy storage device is a secondary, cylindrical lithium-ion battery, for example a jelly roll battery.

In some embodiments is provided the use of active material component crystallinity for providing an electrode assembly with improved capacity balance.

In some embodiment is provided the use of active material component crystallinity for improving capacity balance within an electrode assembly.

In some embodiments is provided the use of a first inner active material component and a first outer active material component with different crystallinities for providing an electrode assembly with improved capacity balance.

In some embodiments is provided the use of a first inner active material component and a first outer active material component with different crystallinities for improving the capacity balance in an electrode assembly.

In some embodiments is provided a method of producing an electrode assembly according to the first aspect of the disclosure comprising the following steps in any order:
- Providing a first inner active layer comprising a first inner active material, the first inner active material comprising a first inner active material component
- Providing a first outer active layer comprising a first outer active material, the first outer active material comprising a first outer active material component
- Coating the inner and outer sides of the first composite electrode with the first inner active layer and the first outer active layer respectively
- Rolling the first composite electrode with a second composite electrode, a first separator and a second separator to provide an electrode assembly suitable for use in a lithium ion battery.

While the disclosure is amenable to various modifications and alternative forms, specifics thereof have been shown by way of example and will be described in detail. It should be understood, however, that other embodiments, beyond the particular embodiments described, are possible as well. All modifications, equivalents, and alternative embodiments falling within the spirit and scope of the appended claims are covered as well.

The above discussion is not intended to represent every example embodiment or every implementation within the scope of the current or future Claim sets. The figures and Detailed Description that follow also exemplify various example embodiments. Various example embodiments may be more completely understood in consideration of the following Detailed Description.

### DESCRIPTION OF DRAWINGS

One or more embodiments will now be described by way of example only with reference to the accompanying drawings, in which:
Figure 1 shows an isometric view of a partially rolled cylindrical battery; and
Figure 2 shows a cross-section of a section of a cylindrical battery, for example the cylindrical battery of Figure 1.

When the following directions like "up", "down", "left" and "right" are used they always refer to the respective figure referenced.

Embodiments of the present disclosure will now be described more fully hereinafter, with reference to the figures. The same reference numbers are used throughout the figures. The invention may, however, be embodied in many different forms and should not be construed as limited to the embodiments set forth herein; rather, these embodiments are provided by way of example so that this disclosure will be thorough and complete, and will fully convey the scope of the invention to those persons skilled in the art.

The electrode assembly roll 1 comprises two conductive foils 2, 2', both foils coated with respective active layers 4, 4'. The active layer 4 on one of the conductive foils 2 constitutes an active part of the positive electrode/cathode and the active layer 4' of the other conductive foils 2' constitutes an active part of the negative electrode/anode of the electrode assembly. Alternatively, the anode and cathode may be arranged on the first and second conductive foils respectively.

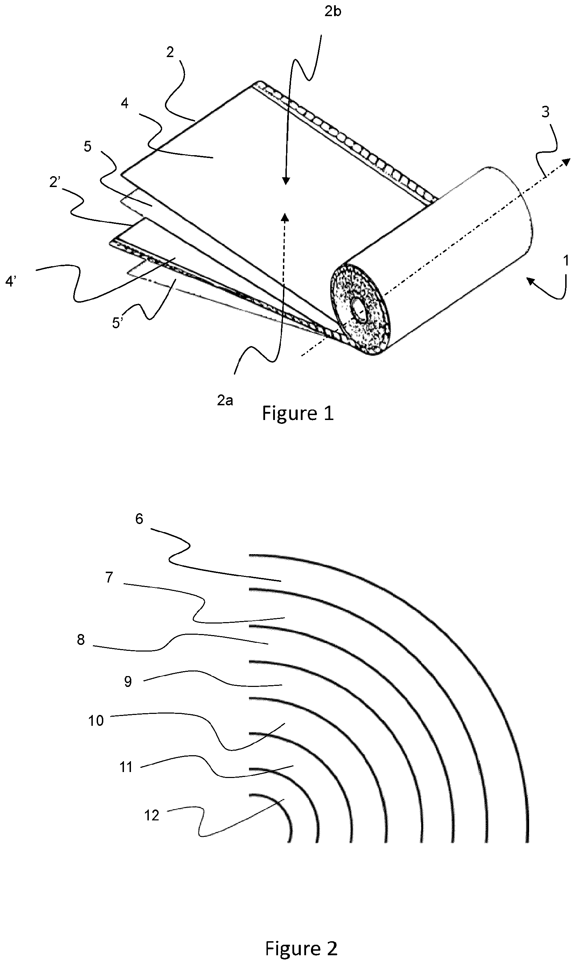

Each of the conductive foils 2, 2' is coated with a positive active layer on both sides, or a negative active layer on both sides (for example the faces of conductive foil 2 on sides 2a and 2b may comprise active layers that form a pair of cathodes, or alternatively a pair of anodes). Figure 1 shows only one active material layer 4, 4' for each of the conductive foils 2, 2'. The positive or negative active layer on each side of a conductive foil may be the same, or it may be different.

The two conductive foil 2, 2' are arranged with a separator 5 positioned therebetween. In particular, the electrode roll assembly 1 comprises two separator sheets 5, 5', one 5 positioned directly between the two conductive foils 2, 2' and the other 5' positioned to cover an outer surface of one of the conductive foils 2' so that it separates the outer conductive foil 2' from the inner conductive foil 2 of adjacent layers of wound foils.

The conductive foils 2, 2' (and the separators 5, 5') are wound in a longitudinal direction 3 into a cylindrical shape to form the electrode roll assembly 1.

Referring to Figure 2, the first conductive foil 11 is a positive current collector and is coated on its inner 12 and outer surfaces 10 (oriented towards and away from the central of the cylindrical battery respectively). The positive current collector 11 is coated with an inner positive active layer 12 and an outer positive active layer 10. The second conductive foil 7 is a negative current collector and is coated with an inner negative active layer 8 and an outer negative active layer 6.

A separator 9 is disposed between the outer positive active layer 10 and the inner negative active layer 8 such that the inner positive active layer 10 and the negative active layer 8 form an interfacial electrode pair wherein the positive electrode (being closer to the centre of the wind) is shorter than the adjacent negative electrode. The electrode assembly further comprises a second separator between then outer negative active layer 6 and the next inner conductive foil of an adjacent layer of wound sheets. The second separator is not shown in Figure 2.

The inner positive active layer 12 comprises an inner positive active material and the outer positive active layer 10 comprises an outer positive active material. According to the disclosure, the chemical composition of the inner positive active material and the outer positive active material is the same but the crystallinity is different.

### DETAILED DESCRIPTION

### Conductive foil

The electrode assembly of the disclosure comprises a first and a second conductive foil. The first and second conductive foils act as one of a negative or a positive current collector, or a "source" and "sink".

In a preferred embodiment, the first conductive foil acts as the positive current collector and the second conductive foil acts as the negative current collector.

Examples of suitable positive current collectors are aluminium, nickel and stainless steel. Preferably the positive current collector is an aluminium foil.

Examples of suitable negative current collectors are copper, nickel and stainless steel. Preferably the negative current collector is a copper foil.

### Active layer

The electrode assembly of the disclosure comprises first inner and first outer active layers respectively on the inner and outer sides of the first conductive foil, and second inner and second outer active layers respectively on the inner and outer sides of the second conductive foil. The active layers may form positive electrodes or negative electrodes (i.e. capable of releasing or taking up lithium ions on discharge). Preferably, the first composite electrode is a positive electrode (such that the first inner and first outer active layers are positive electrodes and capable of taking up ions during discharge of the electrode assembly), and the second composite electrode is a negative electrode (such that the second inner and second outer active layers are capable of releasing ions during discharge of the electrode assembly).

The active layers typically comprise a binder, an active material and optionally a conductive additive.

The wt% of the components in the active layers described herein represents the percent by weight of the composition excluding any dispersing medium, i.e., wt% solids.

The active layers may be applied to the conductive foil by depositing a slurry comprising a binder, an active material, optional conductive additive and a suitable solvent on the surface of the foil. Optionally, a drying treatment or pressurization treatment is performed after deposition of the active layer.

In some embodiments, a calendaring process, also referred to as a compaction process, may be performed to increase the density of the active layer. The compaction process may preferably involve pressing or rolling of the surface of the active layer. Optionally, the active layer may be exposed to a magnetic field and/or a laser treatment, typically before calendaring. It will be appreciated that the calendaring process may be performed a single time or multiple times during the processing of the active layer.

The calendaring process may also increase the adhesion between the conductive foil and/or and the active layer deposited thereon.

The active layer may be provided directly on the inner surface of the first or the second conductive foil, or alternatively there may be an interlayer between the foil and the active layer.

The active layer may form a continuous layer covering at least a major part of the surface of the conductive foil.

The components typically used to form the active layer will now be described in more detail.

### Binder

The active layers of the disclosure may comprise a binder. The role of the binder is to provide mechanical strength and flexibility. Examples of suitable binders are polytetrafluoroethylene, ethylene propylene diene monomer, carboxymethyl cellulose and polyvinylidene fluoride, however any suitable binder suitable for use in a battery, particularly a lithium-ion battery, may be used.

The active layer may comprise, by weight, 0.01-10 wt% binder, for example from about 0.02-8 wt%, from about 0.05-6 wt%, or from about 0.06-4 wt% binder. Preferably the active layer comprises from about 0.1 to 3 wt% binder, even more preferably 0.2 wt% to 2 wt% binder, such as from 0.5 wt% to 1.5 wt% binder. Most preferably the active layer comprises about 1 wt% binder.

### Conductive additive

The active layers optionally further comprise a conductive additive. The role of the conductive additive is to improve the electrical properties of the active layer and to provide electrical conductivity between the particles of active material in the active layer.

Suitable conductive additives include acetylene black, carbon black, graphene, graphite, mesocarbon microbead (MCMB), pitch-based carbon, coke powders, carbon nanotubes or metallic powders. These conductive additives may be used alone or in combination.

Preferred conductive additives are selected from carbon black, graphite, carbon nanotubes, or mixtures thereof.

In an embodiment, the active layer may comprise 0.01-10 wt% conductive additive, for example from about 0.02-8 wt%, from about 0.05-6 wt%, or from about 0.06-4 wt% conductive additive. Preferably the active layer comprises from about 0.1 to 3 wt% conductive additive, even more preferably 0.2 wt% to 2 wt% conductive additive, such as from 0.5 wt% to 1.5 wt% conductive additive. Most preferably the active layer comprises about 1 wt% conductive additive.

### Active material

The active layers of the disclosure comprise an active material. The term "active material" is to be understood an electrochemical species which can be oxidized and reduced in a system which enables an energy storage device to produce electrical energy during discharge. The role of the active material is to reversibly intercalate lithium ions during charge and discharge cycles.

The active material of the disclosure will now be described with reference to the first (inner and outer) active materials. However, the descriptions also respectively apply to the second inner and second outer active materials.

According to the disclosure, the first inner active material comprises a first inner active material component and the first outer active material comprises a first outer active layer component. Optionally, the first inner active material and/or the first outer active material comprise further active materials.

In some embodiments, the first inner active material consists of the first inner active material component and the first outer active material consists of the first outer active material component.

Preferably, the first inner and first outer active materials are the same.

In the context of the disclosure, "the same" in relation to an active material refers to materials with substantially the same chemistry (e.g. both are NMC materials), substantially the same composition (e.g. ratio of nickel to manganese to cobalt for an NMC material), and optionally substantially the same particle size.

Preferably, active materials that are "the same" have the same chemical formula.

Materials that are "the same" may have different crystallinities. In other words, a material with the same chemistry may be considered the same whether it is in single crystalline form or polycrystalline form.

Preferably, the particles size of the first inner active material and the first outer active material is substantially the same.

Alternatively, the particle size of the first inner active material and the first outer active material is not substantially the same.

In instances where the particle size is not substantially the same, the material with the higher crystallinity typically has the smaller particle size. For example, a single crystal material will often have smaller particles than a polycrystalline material of the same chemistry.

When two materials are the same except for crystallinity, the material with the higher crystallinity may have a particle size that is 30% lower, 20% lower, 15% lower, 10% lower, or 5% lower that the particle size of the material with the lower crystallinity.

In the context of the disclosure, "particle size" refers to the D10 particle size and the D90 particle size.

The "D10 particle size" in the context of the disclosure means that 10% of the particles have a diameter than is smaller than the D10 particle size.

Similarly, the "D90 particle size" in the context of the disclosure means that 90% of the particles have a diameter than is smaller than the D90 particle size.

In the context of the disclosure "substantially the same" in relation to particle size refers to no more than a 10% difference in the D10 particle size and no more than a 10% difference in the D90 particle size. A D10 or D90 particle size difference of more than 10% means that the material do not have substantially the same particle size in the context of the disclosure.

The D10 and D90 particles sizes may be measured by laser diffraction for instance using a Malvern Mastersizer 3000.

Suitable methodologies for measuring particle size and particle size distributions by laser diffraction are detailed in ISO 13320:2020.

Laser diffraction measures particle size distributions by measuring the angular variation in intensity of light scattered as a laser beam passes through a dispersed particulate sample. Large particles scatter light at small angles relative to the laser beam and small particles scatter light at large angles. The angular scattering intensity data is then analysed to calculate the size of the particles responsible for creating the scattering pattern, using the Mie theory of light scattering. The particle size is reported as a volume equivalent sphere diameter.

Preferably, the particle properties (D10 and D90 particle sizes) are measured when dispersed in water.

For dry samples, the particles may be resuspended before measuring the particle size, according to the equipment specifications.

In an example, the cathode active material particles are suspended in water and analysed using a Mastersizer 3000, wherein the the Mastersizer 3000 is set a follows:
Mode: Single mode
Laser light: Red and blue laser light
Measurement time: 10 seconds per measurement
Obscuration range: 4 to 7%
Stabilization time: 30 seconds

The particle size analysis is then be carried out using Mie theory (volume equivalent sphere). To use Mie theory, it is usually necessary to know the refractive index and adsorption index of the sample. These may be determined by any suitable method Preferably, the additional active material of the first inner and first outer active materials, if present, is the same.

An active layer may comprise, by weight, from about 60-99.9 wt% active material, for example from about 70-99.9 wt%, from about 80-99.9 wt%, from about 90-99.9 wt%, or from about 95-99.9 wt% active material. Preferably the active layer comprises from about 96-99.9 wt% active material, even more preferably the active layer comprises about 98 wt% active material.

The wt% of first inner active material in the first inner active layer may be the same as the wt% of the first outer active material in the first outer active layer.

Preferably, the wt % of the first inner active material component in the first inner active layer is the same as the wt % of the first outer active material component in the first outer active layer.

### Separator

The energy storage device of the disclosure comprises a first separator and a second separator disposed between the first and second composite electrodes. The function of these separators is to prevent electrical contact between positive and negative active layers, whilst allowing the passage of ions. Any separator suitable for use in a cylindrical ion (e.g. lithium ion) battery may be used.

For example, the separator may be made from a material such as glass fiber, polyester, Teflon, polyethylene, polypropylene, polytetrafluoroethylene (PTFE), or a combination thereof, and may be in the form of a nonwoven fabric or a woven fabric.

Optionally the separator is an integrated separator. For example, the separator may be integrated with a composite electrode to form an integrated electrode-separator (IES).

In an embodiment, when the electrode assembly is a rolled electrode assembly, the thickness of the first and second separator may be different. This improves the thermal properties and safety of an energy storage device comprising the electrode assembly.

### Electrolyte

The electrode assembly of the disclosure further comprises an electrolyte. The electrolyte used in the electrode assembly according to the present disclosure may be a liquid electrolyte comprising at least one salt (particularly at least one lithium salt) and at least one or more solvents selected from the group consisting of carbonate solvents and their fluorinated equivalents, diC₁₋₄ ethers and their fluorinated equivalents and ionic liquids. Alternatively, the electrolyte may be a solid electrolyte.

The lithium salt is preferably one or more selected from the group consisting of lithium hexafluorophosphate (LiPF₆), lithium bis(fluorosulfonyl)imide (LiFSI), lithium bis(trifluoromethanesulfonyl)imide (LiTFSI), lithium (fluorosulfonyl)(trifluoromethanesulfonyl)imide (LiFTFSI), lithium bis(pentafluoroethanesulfonyl)imide (LiBETI), lithium (pentafluoroethanesulfonyl)(trifluoromethanesulfonyl)imide (LiPTFSI), lithium trifluoromethanesulfonate (LiOTf), lithium bis(oxalato)borate (LiBOB), lithium difluoro(oxalato)borate (LiDFOB), lithium difluorobis(oxalato)phosphate (LiDFOP), lithium tetrafluoro(oxalato)phosphate (LiTFOP), lithium tetrafluoroborate (LiBF₄), lithium nitrate (LiNO₃) lithium 2-trifluoromethyl-4,5-dicyanoimidazole (LiTDI). In one embodiment, the solvent is selected from the group consisting of 1,2-dimethoxyethane (DME), *N*-propyl-*N*-methylpyrrolidinium bis(fluorosulfonyl)imide (PYR13-FSI), *N-*propyl-*N*-methylpyrrolidinium bis(trifluoromethanesulfonyl)imide (PYR13-TFSI), 1-butyl-1-methylpyrrolidinium bis(fluorosulfonyl)imide (PYR14-FSI), 1-butyl-1-methylpyrrolidinium bis(trifluoromethanesulfonyl)imide (PYR14-TFSI), 1-ethyl-3-methylimidazolium bis(fluorosulfonyl)imide (EMIM-FSI), 1-ethyl-3-methylimidazolium bis(trifluoromethanesulfonyl)imide (EMIM-TFSI), dimethyl carbonate (DMC), ethyl methyl carbonate (EMC), diethyl carbonate (DEC), ethylene carbonate (EC), and propylene carbonate (PC), and their fluorinated equivalents.

### First composite electrode

The electrode assembly of the disclosure comprises a first composite electrode comprising a first inner and a first outer active layer coated on the inner and outer sides of the first conductive foil.

Preferably the thickness of the first inner active layer and the first outer active layer is substantially the same.

Preferably the density of the first inner active layer and the first outer active layer is substantially the same.

In the context of the disclosure, "substantially the same" in relation to active layer density or thickness refers to no more than a 10% difference between the first inner and first outer active layers. The same also applies to the second inner and second outer active layers.

When the first composite electrode is a positive electrode, the first inner and first outer active layers are positive active layers. In such embodiments, the active material of the first inner and first outer active layers is a positive active material capable of reversibly intercalating ions (preferably lithium ions) during charge and discharge.

Preferably, the positive active material is an intercalation material.

Any positive active material suitable for use in a lithium-ion battery, or combinations thereof, may be used. Example of suitable positive active materials are (LiMn₂O₄), lithium cobalt oxide (LiCoO) a nickel-manganese-cobalt oxide [Li(Niₓ Mn_{y}Co₂)._{0.9}, or a lithium iron polyanion oxide Such as lithium iron phosphate (LiFePO) or lithium iron fluorophosphate (LiFePOF) intermingled in at least one of polyvinylidene fluoride (PVdF), an ethylene propylene diene monomer (EPDM) rubber, or carboxymethyl cellulose (CMC). Other lithium-based active materials may also be utilized besides those just mentioned.

Exemplary positive active materials include lithium iron phosphate, nickel-cobalt-manganese (NMC) composite oxides and lithium NMC (Li-NMC) composite oxides such as lithium cobalt oxide (LiCoO₂), lithium nickel oxide (LiNiOz), lithium manganese oxide (LiMn₂O₄), lithium nickel cobalt oxide (LiNiₓCo₁₋ₓO₂ (0<x<1) or LiNi_{1-x-y}CoₓAl_{y}O₂ ((0<x≤0.2, 0<y≤0.1)) as well as lithium nickel cobalt manganese (NCM) oxide (LiNi_{1-x-y}CoₓMn_{y}O₂ (0<x+y<1)).

Preferably, the fist inner active material and the first outer active material are positive active materials.

Preferably the first inner and first outer active layers comprise one or more of lithiumtransition metal composite oxide such as an NCM (Ni, Co, Mn) transition metal composite, or an NCX, wherein X is a transition metal other than Co.

The first inner and outer active layers further comprise a binder and optionally a conductive additive.

Preferably, the binder and/or conductive additive of the first inner and first outer active layers are the same.

Preferably, the wt % binder, conductive additive and/or active material is the same in the first inner and first outer active layer.

Preferably the wt % of active material is the same in the first inner and first outer active layers.

Preferably, the wt % of first inner active material component in the first inner active layer is the same as the wt % of first outer active material component in the first outer active layer.

Preferably, the first inner active material component and the first outer active material component are the same, apart from the crystallinity.

In the context of the disclosure, "crystallinity" refers to the degree of structural order, and the structural orientation of a material. Specifically, in the context of the disclosure, 'crystallinity' refers to the structural order of active material component particles.

For example, the crystallinity of a first inner or outer active material components may refer to the proportion of material with the same crystal structure. A high crystallinity means that a high proportion of the material has the same crystal structure.

In some embodiments, the first inner active material component and the first outer active material component are single crystal materials.

In the context of the disclosure, "single crystal" refers to a material in which the crystal lattice of each individual particle is continuous and unbroken i.e., there are no grain boundaries within the particles, and that the crystal orientation is the same within all of the particles. In the context of the disclosure, a 'single crystal' material has the highest possible crystallinity.

In some embodiments, one of the first inner and first outer active material components is a single crystal material and the other is a polycrystalline material.

In some embodiments, both the first inner active material component and the first outer active material component are polycrystalline materials.

In the context of the disclosure, "polycrystalline" refers to a material in which the individual particles have grain boundaries, and wherein different crystallographic orientations are present in the same particle.

Polycrystalline materials may comprise polycrystalline particles, single crystal particles or mixtures thereof. For example, the first inner active material component may comprise 50 wt% single crystal material and 50 wt% polycrystalline material.

Any suitable method may be used to determine the crystallinity of the first inner active material component and the first outer active material component, for example SEM imaging or X-ray powder diffraction (XRD). Either the active material component alone or an active layer comprising an active material component, binder and optionally a conductive additive may be tested.

To determine whether the active material component is a single crystal material or a polycrystalline material, the structure of the particles may be examined. Single crystal materials will consist of particles absent of grain boundaries, wherein polycrystalline materials will comprise at least some particles with grain boundaries.

A polycrystalline material is considered a cluster of small particles fused at grain boundaries to form a single particle. Polycrystalline particles are therefore comprised of small primary particles that together form a polycrystalline secondary particle.

If one sample consists of particles with grain boundaries, and the other consists of particles without grain boundaries, then the two samples have different crystallinities and may be a first inner or first outer active material component according to the disclosure. Samples with particles comprising grain boundaries have a lower crystallinity than samples with particles that do not comprise grain boundaries. This method is therefore particularly suitable for comparing two samples wherein one is a polycrystalline material and one is a single crystal material.

SEM imaging may be suitable for determining whether the active material component is a single crystal or polycrystalline material. SEM imaging is of particular use when the active material consists only of the active material component, and not a mixture of active materials.

Any suitable method may be used for preparing the SEM samples and obtaining the images.

For example, ten 5 µm x 5 µm SEM images may be taken of a sample comprising the active material component. If an average of 10% or less of the active material component particles in the ten images comprise grain boundaries, the material is considered a single crystal material. On the other hand, if an average of more than 10% of the active material component particle comprise grain boundaries, the material is considered a polycrystalline material.

For samples wherein there is more than one type of active material, or wherein the two samples to be compared are polycrystalline, XRD may be a more suitable method for comparing crystallinity.

Powder X-ray diffraction (XRD) may for instance be carried out using a Siemens D5000 diffractometer equipped with a Cu target X-ray tube and a diffracted beam monochromator. Diffraction patterns were collected in the scattering angle (20) range of 15-70° at 0.025° intervals with a dwell time of 15 s. A 0.5° divergence slit, 0.5° anti-scattering slit and 0.05 mm receiving slit were used for high resolution measurements. Measurements on a NIST sample (standard reference material 1976) of highly crystalline corundum under the same measurement conditions showed a full width half maximum of the (113) peak of 0.024 degree for the Ko peak (centered at 43.35°), demonstrating the instrumental resolution at this diffraction angle.

By definition, the first inner active material component and the first outer active material component have the same chemical composition. Accordingly, if the XRD patterns of the first inner and first outer active material components are not the same, the crystallinity is different.

For some embodiments, it may be beneficial to determine which material has the higher crystallinity via XRD.

Due to the long-range order of single crystal materials, the XRD pattern will have intense, sharp peaks. A polycrystalline form of the same material will have the same XRD pattern, however the peaks will be broader and less intense.

The relative crystallinity of a single crystal and a polycrystalline material can be determined by comparing the 5 (or preferably 10) largest common 2θ peaks that XRD patterns have in common. Specifically, the FWHM of the 5 (or preferably 10) largest common 2θ peaks can be compared.

The material with the narrowest average FWHM value for the 5 (or preferably 10) largest common peaks is the material with the higher crystallinity i.e., the single crystal material.

This method may be used to determine the relative crystallinity of two polycrystalline materials.

In some cases, it may be difficult to identify the 5 (or 10) largest common 2θ peaks. This may be the case when the first inner or first outer active material component is a mixture of single crystal and polycrystalline material. Such spectra may be complicated due to the presence of multiple different crystal forms in the same sample.

For such sample, it may be necessary to refer to a reference material, wherein the reference material is the a single crystal form of the first inner and first outer active material components.

In some embodiments, the first inner active material component has a higher crystallinity than the first outer active material component.

In some embodiments, the first inner active material is a single crystal material and the first outer active material is a polycrystalline material.

Changing the crystal structure of an active material may influence the properties of an active layer comprising the active material. For example, an active material with a low crystallinity may have improved electrical properties, for example a higher specific capacity after one or more cycles.

Typically, active layers comprising single crystal active materials have a lower first cycle efficiency than active layers comprising polycrystalline active materials.

In the context of the disclosure, the "first cycle efficiency" refers to the difference between the capacity of the first charge and the capacity of the first discharge of an electrode or electrode assembly. The first cycle efficiency is often presented as a percentage: (first charge capacity/first discharge capacity) x 100.

In the context of the disclosure "capacity" refers to the total amount of charge stored electrochemically in an active material, an electrode or an electrode assembly. The phrase "specific capacity" refers to the total amount of charge stored electrochemically in an active material per gram of active material.

During the first charge/discharge cycle of a battery, an irreversible loss in active material specific capacity occurs. This is due to a reaction between the electrolyte and the outer surface of the active layer which forms a solid electrode interface (SEI). During the reaction, some of the electrolyte and some of the active material is consumed such that the total active amount of electrolyte and active material is diminished.

Typically, it takes a number of cycles for the SEI to fully form, however the largest loss in specific capacity due to depletion of the active layer material component occurs during the first cycle.

Surprisingly, the degree of irreversible specific capacity loss with SEI formation is linked to the crystallinity of the active material component within an active layer. Often, the irreversible specific capacity loss of a single crystal material is higher than for a polycrystalline material. Consequently, the first cycle efficiency of an electrode or electrode assembly comprising a single crystal material is often lower than the first cycle efficiency of an electrode or electrode assembly comprising a polycrystalline material.

It is not uncommon that the specific capacity of a polycrystalline form of an active material is higher than the specific capacity of a single crystal form of the same material after the first charge/discharge cycle. According, the specific capacity of an electrode comprising a polycrystalline material may be higher than the specific capacity of an electrode comprising a single crystal form of the same material after the first charge/discharge cycle.

In some embodiments, the first cycle efficiency of a half cell comprising the first inner active layer is different to the first cycle efficiency of the same half cell comprising the first outer active layer. Preferably, the first cycle efficiency of a half cell comprising the first inner active layer is lower than the first cycle efficiency of the same half cell comprising the first outer active layer.

In some embodiments, the first cycle efficiency of a half cell comprising the first inner active layer is from 0.05 to 20% lower than the internal resistance of the same half cell comprising the first outer active layer, for instance from 0.1 to 12% lower, or from 0.1 to 8% lower, or from 0.2 to 5% lower, preferably the first cycle efficiency of a half cell comprising the first inner active layer is from 0.5 to 5% lower.

To determine the difference in first cycle efficiency, half cells are prepared comprising the active material components to be tested.

Any suitable half cell configuration may be used, for example a coin cell. The half cells should however be the same, apart from the active material component.

Similarly, any suitable test procedure for determining the first cycle efficiency may be used, and the test procedure should be the same for the two samples to be compared.

For example, testing may be carried out with a standard cell cycler, such as a WONIAK PNE UC (Universal Battery Cycler). For each type of active material component, three half cells should be fabricated and tested, and the average of the three measurements recorded.

An example of a suitable test procedure for determining the first cycle efficiency is outlined below.

In some embodiments, the internal resistance, or direct current internal resistance (DCIR), of a half cell comprising the first inner active layer is higher than the internal resistance of a half cell comprising the first outer active layer.

In some embodiments, the internal resistance (DC-IR) of a half cell comprising the first inner active layer is from 0.1 to 20% higher than the internal resistance (DCIR) of the same half cell comprising the first outer active layer, for instance from 0.2 to 12% higher, or from 0.3 to 8% higher, or from 0.5 to 5% higher, preferably from 0.7 to 3.5% higher. Preferably the internal resistance of a half cell comprising the first inner active layer is from 1 to 3% higher.

In the context of the disclosure, "internal resistance" of a half cell refers to the direct current internal resistance (DCIR) value of a half cell comprising a composite electrode. The terms "internal resistance", "DCIR", and "DCIR value" may be used interchangeably throughout the disclosure.

To compare the internal resistance of active layers, two half cells may be prepared comprising the first inner and first outer active layer respectively. Any suitable half cell may be used, for example a coin cell. Apart from the active layers, the half cells should be the same.

The DCIR value of an electrode assembly may be determined via the method described in US8482254B2, however any suitable method for determining the DCIR may be used, as long as the same procedure is used for to two half cells to be compared.

The DCIR value can be determined according to the following equation: (V_{OC}-V_{Tx})/I_{LOAD}, where I_{LOAD} is the current rate, Voc is the open circuit potential (OCP) of the cell (also referred to as the open circuit voltage (OCV)) and V_{Tx} is the voltage after applying the load for a time of x seconds.

Typically, DCIR measurements are the 0.1s-30s DCIR, where the load is applied for 0.1s to 30s. The load may be applied at a state of charge (SOC) of anywhere between 0-100%. Usually, the load is applied between 20% to 80% SOC, or preferably the load is applied at 50% SOC. The current to apply the load may be between a rate of 0.5C to 3C, normalized to the active material capacity, wherein typically a 2C current is preferred.

Figure 3 shows an example of a time (s) vs potential (V) plot suitable for determining the DCIR value of a half cell according to procedure the described herein.

If an electrode assembly comprising a first inner and a first outer active layer is to be tested, the electrode assembly should first be disassembled into its components.

Once disassembled, one disc can be cut from the inner side of the first composite electrode and one disc from the outer side of the first composite electrode. The respective backside of each electrode may then be cleaned, and equivalent half cells may be fabricated.

The above procedure may then be used to determine the DCIR value of each of the half cells.

Each of the tests shown in Tables 1-4 below is be carried out in order for each coin cell.

**Table 1.**

| | **Test 1** | **Formation** | | | | | | |
|---|---|---|---|---|---|---|---|---|
| **#** | **Step** | **Mode** | **Voltage (V)** | **Current (C)** | **Cut-off condition** | | | |
| | | | | | **Voltage (V)** | **Current (C)** | **Time (min)** | **Time (sec)** |
| 1 | Cycle | - | - | - | - | - | - | - |
| 2 | Charge | CCCV | 4.3 | 0.1 | - | 0.05 | - | - |
| 3 | Rest | - | - | - | - | - | 10 | - |
| 4 | Discharge | CC | - | 0.1 | 3.0 | - | - | - |
| 5 | Rest | - | - | - | - | - | 10 | - |
| 6 | End | - | - | - | - | - | - | - |

**Table 2.**

| | **Test 2** | **Capacity check** | | | | | | |
|---|---|---|---|---|---|---|---|---|
| **#** | **Step** | **Mode** | **Voltage(V)** | **Current (C)** | **Cut-off condition** | | | |
| | | | | | **Voltage (V)** | **Current (C)** | **Time (min)** | **Time (sec)** |
| 1 | Cycle | - | - | - | - | - | - | - |
| 2 | Charge | CCCV | 4.3 | 0.2 | - | 0.05 | - | - |
| 3 | Rest | - | - | - | - | - | 10 | - |
| 4 | Discharge | CC | - | 0.2 | 3.0 | - | - | - |
| 5 | Rest | - | - | - | - | - | 10 | - |
| 6 | End | - | - | - | - | - | - | - |

**Table 3.**

| | **Test 3** | **DCIR** | | | | | | |
|---|---|---|---|---|---|---|---|---|
| **#** | **Step** | **Mode** | **Voltage(V)** | **Current (C)** | **Cut-off condition** | | | |
| | | | | | **Voltage (V)** | **Current (C)** | **Time (min)** | **Time (sec)** |
| 1 | Cycle | - | - | - | - | - | - | - |
| 2 | Charge | CCCV | 4.3 | 0.2 | - | 0.05 | - | - |
| 3 | Rest | - | - | - | - | - | 10 | - |
| 4 | Discharge | CC | - | 3.0 | 3.0 | - | - | 10 |
| 5 | Discharge | CC | - | 0.2 | 3.0 | - | - | 10 |
| 6 | Discharge | CC | - | 3.0 | 3.0 | - | - | 10 |
| 7 | Discharge | CC | - | 0.2 | 3.0 | - | - | 10 |
| 7 | Discharge | CC | - | 0.2 | 3.0 | - | 150 | - |
| 8 | Discharge | CC | - | 3.0 | 3.0 | - | - | 10 |
| 9 | Discharge | CC | - | 0.2 | 3.0 | - | - | 10 |
| 10 | Discharge | CC | - | 3.0 | 3.0 | - | - | 10 |
| 10 | Discharge | CC | - | 0.2 | 3.0 | - | - | 10 |
| 11 | Discharge | CC | - | 0.2 | 3.0 | - | - | - |
| 12 | Rest | - | - | - | - | - | 10 | - |
| 13 | End | - | - | - | - | - | - | - |

**Table 4.**

| | **Test 4** | **Rate capability** | | | | | | |
|---|---|---|---|---|---|---|---|---|
| **#** | **Step** | **Mode** | **Voltage(V)** | **Current (C)** | **Cut-off condition** | | | |
| | | | | | **Voltage (V)** | **Current (C)** | **Time (min)** | **Time (sec)** |
| 1 | Cycle | - | - | - | - | - | - | - |
| 2 | Charge | CCCV | 4.3 | 0.2 | - | 0.05 | - | - |
| 3 | Rest | - | - | - | - | - | 10 | - |
| 4 | Discharge | CC | - | 0.33 | 3.0 | - | - | - |
| 5 | Rest | - | - | - | - | - | 10 | - |
| 6 | Charge | CCCV | 4.3 | 0.2 | - | 0.05 | - | - |
| 7 | Rest | - | - | - | - | - | 10 | - |
| 8 | Discharge | CC | - | 1.0 | 3.0 | - | - | - |
| 9 | Rest | - | - | - | - | - | 10 | - |
| 10 | Charge | CCCV | 4.3 | 0.2 | - | 0.05 | - | - |
| 11 | Rest | - | - | - | - | - | 10 | - |
| 12 | Discharge | CC | - | 2.0 | 3.0 | - | - | - |
| 13 | Rest | - | - | - | - | - | 10 | - |
| 14 | Charge | CCCV | 4.3 | 0.2 | - | 0.05 | - | - |
| 15 | Rest | - | - | - | - | - | 10 | - |
| 16 | Discharge | CC | - | 0.2 | 3.0 | - | - | - |
| 17 | Rest | - | - | - | - | - | 10 | - |
| 18 | End | - | - | - | - | - | - | - |

After completion of the tests in Tables 1-4, the first cycle efficiency is determined by comparing the difference in the first charge capacity and first discharge capacity.

Typically, for ease of comparison, the first cycle efficiency is reported as a percentage.

In the rolled electrode assembly of the disclosure, a first outer active layer will form an interfacial electrode pair with a second inner active layer. Due to the curvature of the rolled assembly, this means that the first outer active layer will be shorter than the second inner active layer it faces.

The result is capacity imbalance across the interfacial electrode pair due to the difference in size. This is particularly problematic for lithium-ion batteries. For example, during charge/discharge, lithium plating may occur at the short electrode, due to an imbalance in the lithium intercalation/deintercalation properties. This is particularly relevant for applications requiring fast charge and discharge.

Capacity balance across a battery can be improved by compensating for the difference in length. For example, capacity balance can be improved by providing a longer electrode with a lower specific capacity than the specific capacity of the corresponding shorter electrode.

In the context of the disclosure, "capacity balance" means that the specific capacity of the electrodes in an interfacial pair is the substantially the same.

Accordingly, the specific capacity of the first outer electrode may be higher than the specific capacity of the second inner electrode.

In a rolled or cylindrical electrode assembly, the first outer electrode forms the shorter electrode in an interfacial pair, and the first inner electrode forms the longer electrode in an interfacial pair. To improve capacity balance across each interfacial electrode pair within a rolled assembly, the specific capacity of the first inner electrode and first outer electrode should therefore be different. Preferably the specific capacity of the first inner electrode is lower than the specific capacity of the first outer electrode.

It is important to provide capacity balance throughout the lifetime of the electrode assembly and not only directly after fabrication. As described elsewhere, specific capacity typically decreases with charge/discharge cycle, wherein the most significant drop-off in specific capacity occurs during the first charge/discharge cycle.

The first cycle efficiency can therefore be used as an indication of the relative specific capacity of the first inner active material and the first outer active material after the electrode assembly has been charged/discharged a number of times.

In some embodiments, the first inner active material component and the first outer active material component have a different specific capacity after the first charge/discharge cycle.

Preferably, the first inner active material component has a lower specific capacity than the first outer active material component after the first charge/discharge cycle.

Preferably, the first inner active layer has a lower specific capacity than the first outer active layer after the first charge/discharge cycle.

Accordingly, providing a first inner active material component with a higher crystallinity that the first outer active material component may provide an electrode assembly with improved capacity imbalance.

The problem of capacity imbalance is particularly acute in rolled electrode assemblies (e.g., cylindrical batteries); however it may also occur in any battery assembly comprising curved, rolled, or non-linear electrodes, or for electrode assemblies comprising interfacial electrode pairs of different sizes.

Table 5 demonstrates that the first cycle efficiency of a half cell is dependent on the crystallinity of the active material. Specifically, the data show that for an NMC active material, the first cycle efficiency value is lower for single crystal materials i.e., materials with a higher crystallinity, than for polycrystalline materials.

Furthermore, it is shown that the first cycle efficiency can be tuned by mixing the polycrystalline and single crystal forms of an NMC material (Sample F, Table 5).

It will be appreciated that the degree to which the active layer properties should be different depends on the length mismatch and the curvature of the electrodes. When the size (and therefore capacity) mismatch is high, a large difference in the electrical properties may be needed to improve the properties of the battery.

Furthermore, for some active materials, one crystal form may have a different specific capacity to another crystal form due to differences in the ion intercalation properties. It will be appreciated that in order to improve the properties of the electrode assembly, the relationship between the electrical properties, the specific capacity and the crystalline forms should be to be taken into account.

A benefit of using the crystallinity of the first inner or outer active material to control the properties is that the active layers can be otherwise identical on the inner and outer sides of the first electrode. For example, the wt% of active material, conductive additive and binder may be the same, the density of the active layer may be the same and the thickness of the active layer may be the same.

The rheological properties of the electrode slurry for preparing the first inner and outer active layers may therefore be similar e.g., similar viscosity. This simplifies fabrication because the same procedure may be used to fabricate both the first inner and first outer active layers.

Moreover, providing the same first active material (apart from crystallinity) for the first inner and first outer active layers reduces the risk of cross-contamination during fabrication.

An additional benefit of improving the performance of the battery by varying the crystallinity of the first active materials is that the performance is not sensitive the method of fabrication. In contrast, if the thickness or density of the active layer is varied to compensate for the capacity imbalance, it is extremely important that the calendaring step is precisely defined and consistent for each production line, and each run. This is difficult to achieve on an industrial level and may therefore be associated with an increased error margin.

### Second inner active layer and second outer active layer

The electrode assembly of the disclosure comprises a second inner and a second outer active layer coated on the inner and outer sides of the second conductive foil.

In embodiments where the first conductive foil is a positive electrode, the second conductive foil is a negative electrode. In such embodiments, the second inner and second outer active layers are negative active layers. The active material of a negative active layer is a negative active material capable of reversibly intercalating lithium ions during battery operation.

For example, the second inner and second outer active layers may comprise one or more of metallic lithium, lithium/aluminium alloys, lithium/tin alloys, graphite, black lead or silicon/silicon composite as the negative active material, without being limited thereto.

The second inner and second outer active layers may be the same, or the second inner and second outer active layers may be different.

Preferably the composition of the second inner and second outer active is the same.

Preferably the dimensions of the second inner and second outer active layer are the same.

Preferably the density of the second inner and second outer active layer is the same.

Preferably the second inner and second outer active layer is the same.

Preferably the second inner and second outer active material component is the same.

Preferably the second inner and second outer active material components have the same chemical formula.

Preferably the crystallinity of the second inner and second outer active material component is the same.

Preferably, the second inner and second outer active material component is the same, including chemical formula, and the crystallinity of the second inner and second outer active material component is the same.

Preferably the second inner active material and the second outer active material consist of the second inner active material component and the second outer active material component respectively.

In the context of the second inner and second outer active layer, "the same" means that; the composition of the second inner and second outer active layers is the same, the dimensions and density of the second inner and second outer active layers is the same, the second inner and second outer active material is the same, the second inner and second outer active material component is the same, and the crystallinity of the second inner and second outer active material component is the same.

In such embodiments, capacity balance is achieved by the properties of first inner and first outer active layers only.

In some embodiments, the second inner and second outer active layers are different.

For example, in an embodiment wherein the second inner and second outer active layers are different, they may comprise different wt% of binder, conductive additive and active material, or alternatively they may comprise a different active binder, conductive additive and/or active material.

The wt% binder, conductive additive and active material in the second inner and second outer active layers may be the same as the ratio of conductive additive, binder and active material in the first inner and first outer active layers, or the ratio may be different.

In embodiments wherein the second inner and second outer active layers are different, the second inner and second outer active material components may be the same, or they may be different. For example, the chemical formula and/or crystallinity may be the same or may be different.

It may be beneficial to adjust the properties of the second inner and second outer active layers in addition to the active layers of the first composite electrode. It will be appreciated that the second inner and second outer active layer may be adjusted in the same way as the first composite electrode.

That is, it may be beneficial to control the resistance (or internal resistance) or first cycle efficiency of the second inner and second outer active layers via the crystallinity of the second inner and second outer active material. For example, a half cell comprising the second inner active layer may have a lower first cycle efficiency than the first cycle efficiency of a half cell comprising the second outer active layer.

This may be particularly beneficial when the active material in the second active layers has poor electrical properties, for example Si or SiOₓ.

The remaining features of the cell of the present disclosure will be briefly described.

### Cell

The present disclosure also relates to cells comprising the electrode assembly of the disclosure, for example a secondary lithium and/or sodium-ion cell, preferably a secondary lithium-ion cell. Such cells further comprising a housing for the electrode assembly. The cell will typically comprise an electrolyte to facilitate the transport of lithium ions between the cathode and the anode. The housing is typically sealed to ensure the electrolyte is retained within the housing. Said housing usually includes terminals in electrical contact with the anode and cathode.

These cells may be combined to form a battery system (i.e. an array of cells).

The disclosure also relates to a vehicle comprising the cell and/or battery system of the disclosure. The vehicle is preferably an electric vehicle, such as a car, truck, bus, scooter, motorbike, bicycle, boat, plane or the like, preferably a car, truck or bus.

Unless otherwise indicated, all technical and scientific terms used herein have the same meaning as commonly understood by one of ordinary skill in the art to which this invention pertains.

All embodiments of the invention and particular features mentioned herein may be taken in isolation or in combination with any other embodiments and/or particular features mentioned herein (hence describing more particular embodiments and particular features as disclosed herein) without departing from the disclosure of the invention.

As used herein, the term 'comprises' will take its usual meaning in the art, namely indicating that the component includes but is not limited to the relevant features (i.e. including, among other things). As such, the term 'comprises' will include references to the component consisting essentially of the relevant substance(s).

Wherever the word 'about' is employed herein in the context of amounts, for example absolute amounts, weights, volumes, sizes, diameters etc., or relative amounts (e.g. percentages) of individual constituents in a composition or a component of a composition (including concentrations and ratios), timeframes, and parameters such as temperatures etc., it will be appreciated that such variables are approximate and as such may vary by ±10%, for example ±5% and preferably ±2% (e.g. ±1%) from the actual numbers specified herein. This is the case even if such numbers are presented as percentages in the first place (for example 'about 10%' may mean ±10% about the number 10, which is anything between 9% and 11%).'

### EXAMPLES

### Example 1

Samples A-F show the results of half-cell testing for coins comprising positive electrodes according to the invention. Each positive electrode comprised an NMC (nickel manganese cobalt) material as the active material component, which was either polycrystalline, single crystal or a mixed of polycrystalline and single crystal.

Samples A and B are NMC materials of the same chemical formula, and samples C-F are materials with the same chemical formula.

According to the invention, samples A and B may respectively be the first outer active material component and the first inner active material component of a first composite electrode.

### Preparation of positive electrode

For each of the samples (A-F, an N:M:C ratio of 90:6:4 was used, and the ratio of active material: binder: conductive additive was 97:1.5:1.5)

The positive electrode slurry was made in a Thinky mixer ARE-250CE according to the following procedure:
1. Binder + conductive additive mixed for 3mins at 2000 rpm
2. Active material added, and mixing was continued for a further 3mins at 2000 rpm
3. The mixture was diluted with NMP followed by further mixing for 3mins at 2000 rpm to produce a slurry
4. A conductive foil was hand-coated with the slurry with a doctor blade to provide a composite electrode.
5. The composite positive electrode was then dried in an oven at 120 °C for 10 mins
6. The composite electrode was then punched to 14mm diameter and pressed with handheld press

The final positive electrode thickness was 50 µm, and the foil thickness was 18 µm.

### Coin cell details

The punched composite positive electrode was then assembled into a coin cell using standard 2032 type of coin cell parts.

The dimensions of the assembled coin cells were 20mm diameter and 3.2mm height. (This includes standard top cap, bottom cap, wave washer 15mm diameter x 1.4mm height, gasket PP, spacer 16mm diameter x 1.0mm thickness).

A lithium chip of 16mm diameter, 75 µm thickness was used as the counter electrode.

A standard LP30 electrolyte (1 molar LiPF6, 50:50 EC:DMC) was used for testing.

### Summary of test results

**Table 5.**

| **Sample** | **Chemical formula** | **Crystal type** | **1^{st} Cycle** | | | **DC-IR @0.2C SOC100** | **Rate capacity / 0.2C** | | |
|---|---|---|---|---|---|---|---|---|---|
| | | | **mAh/g** | **mAg/h** | **%** | **Ω** | **%** | **%** | **%** |
| | | | **0.1Ch** | **0.1Dis** | **Effi** | **DC-IR** | **0.33C** | **1.0C** | **2.0C** |
| A | 1 | Poly | 227.6 | 213.4 | 93.8 | 10.8 | 97.5 | 91.9 | 88 |
| B | 1 | Single | 225.2 | 202 | 89.7 | 8.6 | 98.2 | 94.5 | 92 |
| C | 2 | Poly | 240 | 223.9 | 93.3 | 10.7 | 97.6 | 92.8 | 89.8 |
| D | 2 | Single | 239.9 | 216.7 | 90.3 | 9.0 | 98.3 | 94.8 | 92.3 |
| E | 2 | Poly | 239.5 | 222.0 | 92.7 | 11.5 | 97.7 | 93.0 | 89.7 |
| F | 2 (20% D + 80% E) | Mixed | 240.4 | 220.4 | 91.7 | 10.5 | 97.7 | 93.3 | 90.5 |

Without wishing the be bound by theory, it is though that the crystallinity of an NMC active material affects the first cycle efficiency (% Effi).

Typically, materials with a high crystallinity e.g. a single crystal material, exhibit a higher irreversible capacity loss during the first cycle than materials with a low crystallinity e.g. a polycrystalline material.

Without wishing to be bound by theory, it is thought that the different in first cycle efficiency stems from differences in the SEI (solid electrolyte interface) formation process.

Looking at samples A and B in Table 5, it can be seen that single crystal materials and polycrystalline materials may have a similar specific capacity before the first charge/discharge cycle, with the single crystal material being slightly lower.

After the first charge/discharge cycle however, the specific capacity of the single crystal material (sample B) is significantly lower that the polycrystalline material (sample A).

Furthermore, sample F shows that by mixing single crystal and polycrystalline materials, a first cycle efficiency between that of a pure single crystal material or a pure polycrystalline material is achieved. The specific capacity of an electrode after the first cycle can therefore be tuned by varying the ratio of single crystal and polycrystalline material in an active layer.

For a different type of active material, the opposite relationship between crystallinity and first cycle efficiency may arise. It will therefore be appreciated that the relationship between crystallinity and electrical properties must first be determined for a given active material, before it can be decided which material should form the first inner or first outer active material.

## Claims

1. An electrode assembly for an energy storage device, the electrode assembly comprising:
a first composite electrode;
a second composite electrode;
a first separator; and
a second separator,
wherein:
the first composite electrode comprises a first conductive foil comprising an inner side and an outer side,
the second composite electrode comprises a second conductive foil comprising an inner side and an outer side;
the first separator is positioned between the first and second composite electrodes,
wherein the first composite electrode, the first separator, the second composite electrode and the second separator are wound about a central axis to form a rolled assembly such that
the inner side of the first conductive foil is oriented closer to the central axis than the outer side of the first conductive foil,
the inner side of the second conductive foil is oriented closer to the central axis than the outer side of the second conductive foil, and
the second separator is positioned between the outer side of the second conductive foil and the inner side of the next wind of the first conductive foil wherein,
the inner side of the first composite electrode comprises a first inner active layer comprising a first inner active material layer, and the outer side of the first composite electrode comprises a first outer layer comprising a first outer active material,
the inner side of the second composite electrode comprises a second inner active layer comprising a second inner active material, and the outer side of the second composite electrode comprises a second outer active layer comprising a second outer active material;
wherein,
the first inner active material comprises a first inner active material component and the first outer active material comprises a first outer active material component, wherein
the chemical formula of the first inner active material component the chemical formula of the first outer active material component is the same, and
the crystallinity of the first inner active material component and the crystallinity of the first outer active material component is different.

2. The electrode assembly of claim 1, wherein the internal resistance (DCIR) of a half cell comprising the first inner active layer is higher than the internal resistance of a half cell comprising the first outer active layer.

3. The electrode assembly of claim 1 or 2, wherein the second inner active layer and the second outer active layer are the same.

4. The electrode assembly of any preceding claim wherein the first inner active material component has a higher crystallinity that the first outer active material component.

5. The electrode assembly of any preceding claim wherein, the first inner active material component is a single crystal material and the first outer active material component is a polycrystalline material.

6. The electrode assembly of any preceding claims wherein the first cycle efficiency of a half cell comprising the first inner active layer is from 0.05 to 20% lower than the first cycle efficiency of the same half cell comprising the first outer active layer, for instance from 0.1 to 12% lower, or from 0.1 to 8% lower, or from 0.2 to 5% lower, preferably the first cycle efficiency of a half cell comprising the first inner active layer is from 0.5 to 5% lower.

7. The electrode assembly of any preceding claim wherein the first inner active material component and the first outer active material component are the same, apart from crystallinity, and optionally apart from particle size.

8. The electrode assembly of any preceding claim the first inner and first outer active layers further comprise a binder, optionally a conductive additive and optionally a further active material, and wherein the wt% binder, conductive additive and active material is the same in the first inner and first outer active layer.

9. The electrode assembly of any preceding claim wherein the wt % of the first inner active material and is the same as the wt% first outer active material, optionally wherein the wt % of the first inner active material component is the same as the wt % first outer active material component.

10. The electrode assembly of any preceding claim wherein the active material of the first inner active layer consists of the first active material component and/or the active material of the first outer active layer consists of the first outer active material component.

11. The electrode assembly of any preceding claim wherein the first inner active material and the first outer active material are positive active materials, preferably the first inner active material and the first outer active material are lithium transition metal oxide complexes such as an Li-NMC material, or a combination of Li-NMC materials.

12. The electrode assembly of any preceding claims wherein the energy storage device is a lithium-ion battery, preferably a secondary lithium-ion battery, even more preferably a cylindrical lithium-ion battery.

13. A vehicle comprising the battery according to claim 12.

14. Use of active material component crystallinity for improving capacity balance within an electrode assembly.

15. Use of a first inner active material component and a first outer active material component with different crystallinities for improving the capacity balance in an electrode assembly.
